# EUROPÄISCHE PATENTSCHRIFT

(11) **EP 1 735 506 B1**
(45) Veröffentlichungstag und Bekanntmachung des Hinweises auf die Patenterteilung: **14.06.2017**
(21) Anmeldenummer: 05716517.7
(22) Anmeldetag: 04.04.2005
(51) Int. Cl.: E02D 27/42, F03D 1/00

(54) **VERFAHREN ZUM ERRICHTEN EINES TURMES**
METHOD FOR ERECTING A TOWER
PROCEDE PERMETTANT D'ERIGER UNE TOUR

(30) Priorität: 02.04.2004 DE 102004017008
(43) Veröffentlichungstag der Anmeldung: 27.12.2006
(73) Patentinhaber: Wobben Properties GmbH, 26607 Aurich (DE)
(72) Erfinder: Wobben, Aloys, 26607 Aurich (DE)
(74) Vertreter: Eisenführ Speiser
(86) Internationale Anmeldenummer: PCT/EP2005/003498
(87) Internationale Veröffentlichungsnummer: WO 2005/095717

(56) Entgegenhaltungen:
- DE-A1- 10 238 033
- FR-A- 2 692 611
- GB-A- 606 545
- GB-A- 2 273 310
- JP-A- 2003 293 938
- JP-U- S5 419 504
- US-A- 3 834 094
- US-A- 4 785 593
- US-A- 5 826 387
- PATENT ABSTRACTS OF JAPAN Bd. 004, Nr. 120 (M-028), 26. August 1980 (1980-08-26) & JP 55 078722 A (MITSUBISHI HEAVY IND LTD), 13. Juni 1980 (1980-06-13)
- PATENT ABSTRACTS OF JAPAN Bd. 1996, Nr. 12, 26. Dezember 1996 (1996-12-26) & JP 08 209721 A (NIPPON CHUZO KK; NKK CORP), 13. August 1996 (1996-08-13)

## Beschreibung

Die vorliegende Erfindung betrifft ein Verfahren zum Errichten eines Turmes sowie eine Windenergieanlage mit einem Turm.

US 5,826,387 zeigt ein Fundament bzw. ein Verfahren zum Erstellen eines Fundamentes, welches beispielsweise für Windenergieanlagen verwendet werden kann. US 6,050,038 zeigt ein Fundamentsystem. DE 100 45 735 A1 zeigt eine Befestigung einer Säule auf einem Betonfundament. DE 102 26 996 A1 zeigt ein Verfahren zur Erstellung eines Fundamentes, insbesondere für einen Turm einer Windenergieanlage.JPS5419504U zeigt ein Verfahren zum Errichten einer Säule. Die Säule weist eine Ausrichtnut zum Ausrichten einer ersten Basisplatte auf, welche auf ein Verbindungselement geschraubt wird, das in dem Beton des Fundaments vorgesehen ist. Eine ringförmige Schalung wird vorgesehen und die Schalung wird mit einer Vergussmasse befüllt, welche Vergussmasse nicht sich selbst nivellierend ist. Im Stand der Technik ist es bekannt, bei der Errichtung eines Turmes insbesondere für eine Windenergieanlage ein unteres Turmsegment auf die aus einem Fundament herausragenden Verbindungselemente mit einem Fußflansch aufzusetzen. Dieses untere Turmsegment wird ausgerichtet (nivelliert) und in der ausgerichteten Position fixiert. Dabei entsteht zwischen dem Fußflansch des unteren Turmsegments und der Oberseite des Fundaments eine Fuge. Diese Fuge wird mit einer Vergussmasse aufgefüllt, die dann abbinden muss, bevor sie belastet und der Turm weiter aufgebaut werden kann. Das Abbinden kann durchaus bis zu 24 Stunden dauern.

Zum Handhaben des unteren Turmsegmentes wird ein großer Kran benötigt. Dieser wird aber erst nach dem Abbinden der Vergussmasse weiter für den Aufbau des Turms verwendet. Ein Verlegen des Kranes für die Dauer des Abbindens der Pagelfuge ist jedoch zu aufwändig und unterbleibt deshalb. Damit steht der teure Kran 24 Stunden untätig still.

Aufgabe der Erfindung ist es daher, den Aufbau eines Turmes, insbesondere eines Turmes einer Windenergieanlage, zu rationalisieren.

Diese Aufgabe wird durch ein Verfahren zum Errichten eines Turmes gemäß Anspruch 1 und durch eine Windenergieanlage mit einem Turm gemäß Anspruch 3 gelöst.

Daher wird ein Verfahren zum Errichten eines Turmes einer Windenergieanlage vorgesehen, welcher ein Fundament mit Segmentankern aufweist, wobei die Verbindungselemente mit den Segmentankern verbunden sind und die Oberseite des Fundamentes um ein vorgegebenes Maß überragen. Eine ringförmige Schalung wird mit vorgebbarer Breite und Höhe erstellt und mit einer vorgebbaren Menge einer dünnflüssigen sich selbst nivellierenden Vergussmasse befüllt. Nach dem Abbinden der Vergussmasse wird eine exakt nivellierte Oberfläche erreicht und Entfernen der Schalung wird ein Nivellierring mit einer Mehrzahl von ersten Bohrungen zur Aufnahme der die Oberseite des Fundaments überragende Verbindungselemente auf der Oberfläche der abgebundenen Vergussmasse platziert und ein unteres Turmsegment mit einem unteren Flanschring mit einer Mehrzahl von zweiten Bohrungen zur Aufnahme der Verbindungselemente wird auf dem Nivellierring aufgestellt und damit verbunden. Dabei kann der Ring auch aus mehreren Segmenten gebildet sein.

Dabei liegt der Erfindung die Erkenntnis zugrunde, dass es nicht auf die Nivellierung der unteren Turmsektion ankommt, sondern darauf, dass diese in situ exakt ausgerichtet ist.

Dies kann teilweise unter Vermittlung eines Nivellierringes erreicht werden. Ein solcher Nivellierring ist mit einem Flanschring vergleichbar, der mit deutlich geringerem Aufwand handhabbar ist als die untere Turmsektion, z. B. mit einem fahrzeuggestützten Kran. Auch die präzise Ausrichtung (Nivellierung) des Nivellierringes ist einfacher als der entsprechende Vorgang bei einer Turmsektion. Die in die Schalung eingefüllte dünnflüssige Vergussmasse des erfindungsgemässen Verfahrens nivelliert sich selbst, so dass nach dem Abbinden der Vergussmasse automatisch eine exakt nivellierte Oberfläche zur Aufnahme des Ringes verfügbar ist.

Natürlich kann auch alternativ eine Turmsektion auf die nivellierte Oberfläche gestellt werden, aber diese Alternative wird nicht beansprucht. Dabei ist die Dicke der Vergussmasse materialabhängig und darf eine vorgegebene Mindestdicke nicht unterschreiten. Diese beträgt bevorzugt wenigstens 2 mm, aber nicht mehr als 150 mm. Darüber hinaus kann der Nivellierring bei größerer Breite und/oder Dicke aus einem weniger hochwertigen Material als der Turmflansch hergestellt werden. Außerdem kann der Turmflansch in seiner Breite reduziert werden. Dadurch kann die Transportbreite besser ausgenutzt werden.

Während der Abbindezeit kann aber der (fahrzeuggestützte) Kran bereits für andere Aufgaben eingesetzt werden, während der zur Handhabung der Turmsektionen erforderliche Kran noch nicht benötigt wird.

Erst wenn die Vergussmasse ausgehärtet und der Ring platziert ist, muss der große Kran zur Errichtung des Turmes, z. B. einer Windenergieanlage, bereitstehen und kann dann relativ zügig Segment für Segment den Turm errichten.

Ein besonders rationeller Aufbau eines Turmes kann verwirklicht werden, wenn für das Fundament Fertigteile, insbesondere Beton-Fertigteile, verwendet werden. Diese werden auf der Baustelle einbaufertig angeliefert und zu einem Fundament verbunden, dass dann sofort und damit zeitsparend weiter verwendet werden kann.

Die Erfindung wird nachstehend unter Bezugnahme auf die Figuren erläutert.
- In Figur 1: ist eine schematische Schnittansicht eines Abschnittes eines Turmfußes gezeigt.
- Figur 2a: zeigt eine Draufsicht auf einen Turmfuß,
- Figur 2b: zeigt eine Schnittansicht entlang des Schnittes A-A des Turmfußes von Figur 2a,
- Figur 2c: zeigt eine vergrößerte Ansicht des Ausschnittes X von Figur 2b, und
- Figur 3: stellt eine perspektivische Ansicht eines Turmfußes dar.

Ein Fundament 10 kann als Fertigteilfundament, aber auch als Ortbeton-Fundament oder Transportbeton-Fundament ausgeführt sein. Ein oder mehrere Segmentanker 12 werden in dem Fundament 10 vorgesehen. Diese Segmentanker 12 können in der Form und Anzahl an die besonderen Anforderungen des Fundaments angepasst sein. So kann ein z. B. einstückig ausgebildeter Segmentanker bei Ortbeton- oder Transportbeton-Fundamenten verwendet werden, der in die Bewehrung eingeflochten wird. Bei Fertigteil-Fundamenten werden hingegen mehrere Segmentanker verwendet, die in ihrer Form an das Fertigteil angepasst sind. Natürlich können auch bei Ortbeton- oder Transportbeton-Bauweise mehrere Segmentanker verwendet werden.

Mit dem Segementanker 12 sind Verbindungselemente 14 verbunden. Die Verbindungselemente 14 können als Gewindestangen ausgeführt sein, die mit Muttern 15 in einer vorgegebenen Position an dem Segmentanker 12 befestigt sind. Die Befestigungselemente 14 erstrecken sich ein vorgegebenes Maß außerhalb des Fundamentes 10 über die Fundamentoberseite 11 hinaus. An Stelle einer Schraubverbindung kann auch eine Schweißverbindung verwendet werden.

Eine ringförmige Schalung wird mit vorgebbarer Breite und Höhe erstellt und mit einer vorgegebenen Menge einer dünnflüssigen Vergussmasse befüllt.

Nach dem Abbinden bzw. Aushärten dieser Vergussmasse 17 wird auf der Vergussmasse ein einstückiger oder mehrstückig ausgeführter Nivellierring 18 angeordnet, wobei der Nivellierring 18 exakt nivelliert ist, so dass er eine perfekt ausgerichtete Basis für den Turm bildet und ein unteres Turmsegment mit einem unteren Flanschring 20 und einem dargestellten Turmwandblech 22 kann auf den Nivellierring 18 aufgesetzt werden. Die Gewindestangen 14 greifen durch entsprechend positionierte Löcher im Nivellierring 18 und im unteren Flanschring 20 der unteren Turmsektion hindurch und Muttern 15 werden aufgesetzt, um die untere Turmsektion unter Vermittlung des Nivellierringes 18 fest mit dem Fundament 10 zu verbinden.

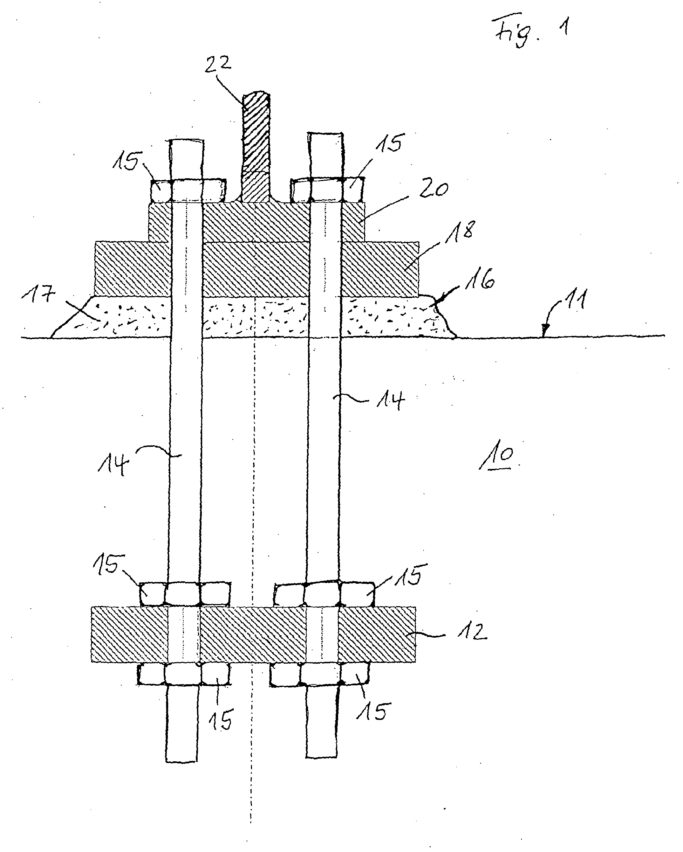

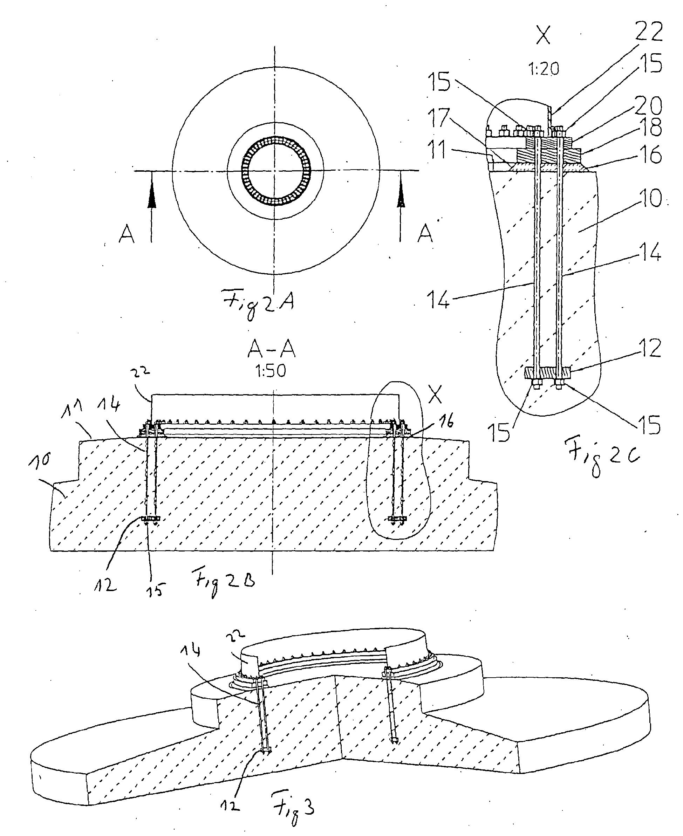

In Figur 2a ist eine Draufsicht auf einen Turmfuß gezeigt. In Figur 2b ist ein Querschnitt entlang des Schnittes A-A aus Figur 2a gezeigt. Wie in Figur 1 ist ein Fundament 10 mit einer Fundamentoberfläche 11 gezeigt. Insbesondere sind zwei Segmentanker 12 sowie vier Gewindestangen 14 gezeigt. In Figur 2c ist der Ausschnitt X vergrößert dargestellt. Diese Darstellung entspricht im Wesentlichen der Darstellung aus Figur 1.

In Figur 3 ist eine perspektivische Darstellung des Turmfußes mit einem aufgeschnittenen Teilstück gezeigt. Die Nivellierung des Turmfußes erfolgt wie gemäß Figur 1 beschrieben.

Da der Turm, z. B. einer Windenergieanlage, jetzt in einem Zug aufgebaut werden kann, muss für die schnelle Turmerrichtung nur einmal ein Kran bereitgestellt werden, der aber bis dahin andere Aufgaben erfüllen kann.

Auch logistische Aufgaben werden vereinfacht. Bisher musste die untere Turmsektion wenigstens 24 Stunden vor den übrigen Turmteilen auf der Baustelle sein, um sie einwandfrei einbauen zu können. Natürlich konnten auch die übrigen Turmteile gleich mit angeliefert werden. Diese konnten jedoch nicht gleich verbaut werden und beanspruchten daher für die Wartezeit zusätzlichen Platz auf der Baustelle.

Durch das erfindungsgemäße Verfahren können die Turmsegmente in einem Transport zeitnah zum Aufstellzeitpunkt angeliefert werden. Dadurch entfallen auch zusätzliche Umladevorgänge, nämlich vom Transportfahrzeug zunächst zur Zwischenlagerung auf dem Boden und dann später von dort zum Einbauort. Viel mehr können zeitnah (just in time) angelieferte Turmsegmente vom Transportfahrzeug abgeladen und sofort eingebaut werden.

Bei der oben beschriebenen Lösung ist darauf zu achten, dass die Vergussmasse stets mit einer (materialabhängigen) Mindestdicke aufgetragen werden muss, da diese Vergussmasse die Kräfte vom Turm in das Fundament übertragen muss. Wenn die Vergussmasse zu dünn aufgetragen wird, kann diese Schicht brechen und zu erheblichen Schäden führen.

Die oben beschriebene Lösung erweist sich als vorteilhaft hinsichtlich der Rationalisierung der Errichtung eines Turmes einer Windenergieanlage. Andererseits spielen auch die Kosten und Materialeigenschaften eine nicht unerhebliche Rolle. Es sei darauf hingewiesen, dass der unterste Flansch eines Turmsegmentes aus einem sehr hochwertigen Material hergestellt sein muss, um die Lasten aus dem Turm ableiten zu können. Wenn ein derartiger Turm auf ein Betonfundament gestellt wird, dann ist der Beton der Schwächere der beiden Verbindungspartner. Somit muss der Turmflansch in seiner Breite so ausgelegt werden, dass der Beton des Fundamentes nicht überlastet wird. Folglich muss der Flansch im unteren Turmsegment eine für den dabei verwendeten Stahl überdimensionierte Breite erhalten. Dies ist insbesondere hinsichtlich der Kosten des dabei verwendeten Stahles als nachteilhaft zu betrachten.

Durch das Einfügen des Nivellierringes ist es nunmehr gemäß der Erfindung möglich, eine Art Übergangsstufe zwischen dem hoch belastbaren aber kostenintensiven Stahl des unteren Turmsegmentes und dem niedriger belastbaren Beton des Fundamentes einzufügen. Somit kann der Nivellierring eine ausreichende Breite aufweisen, um die Lasten der Windenergieanlage ohne Gefahr in das Fundament abzuleiten. Andererseits kann an dieser Stelle günstigerer bzw. billigerer Stahl verwendet werden, und somit kann der Flansch am unteren Turmsegment entsprechend schmaler und damit material- und kostensparender ausgeführt werden.

Ein weiterer Vorteil kann dann zum Tragen kommen, wenn der Nivellierring in Segmenten ausgeführt und somit segmentweise gestapelt und transportiert werden kann. Wenn der Nivellierring einen großen Durchmesser aufweist, ist dies gemäß der Erfindung aus transporttechnischer Sicht nicht problematisch, weil dieser segmentweise gestapelt werden kann. Das untere Turmsegment weist einen schmaleren Fußflansch mit einer geringeren Breite auf, da nunmehr der Fußflansch materialspezifisch dimensioniert werden kann. Ferner kann somit auch die Transportbreite entsprechend verringert werden.

In dem oben angeführten Beispiel wurde eine Errichtung beispielsweise eines Turmes einer Windenergieanlage an Land beschrieben. Eine Errichtung eines Turmes einer Windenergieanlage Off-shore, d.h. im Wasser oder im Meer, kann ebenfalls mit Hilfe des oben beschrieben Nivellierringes sowie einer entsprechenden Nivellierung, bevor ein unteres Turmsegment angebracht wird, erfolgen.

## Patentansprüche

1. Verfahren zum Errichten eines Turmes einer Windenergieanlage, welcher ein Fundament (10) mit Segmentankern (12) aufweist, wobei Verbindungselemente (14) mit den Segmentankern (12) verbunden sind und die Oberseite (11) des Fundamentes (10) um ein vorgegebenes Maß überragen, mit den Schritten:
Erstellen einer ringförmigen Schalung vorgebbarer Breite und Höhe auf der Oberseite (11) des Fundaments (10) und Befüllen der Schalung mit einer vorgebbaren Menge einer dünnflüssigen, sich selbst nivellierenden Vergussmasse (17),
Abbinden der Vergussmasse (17), so dass automatisch eine exakt nivellierte Oberfläche erreicht wird und Entfernen der Schalung,
Platzieren eines Nivellierringes (18) mit einer Mehrzahl von ersten Bohrungen zur Aufnahme der die Oberseite (11) des Fundaments (10) überragenden Verbindungselemente (14) auf der Oberfläche (11) der abgebundenen Vergussmasse (17), und
Aufstellen und Verbinden eines unteren Turmsegmentes (22) mit einem unteren Flanschring mit einer Mehrzahl von zweiten Bohrungen zur Aufnahme der Verbindungselemente (14) auf dem Nivellierring (18) mittels der Verbindungselemente (14).

2. Verfahren nach Anspruch 1, wobei Beton-Fertigteile für das Fundament (10) verwendet werden.

3. Windenergieanlage, mit
einem Turm, welcher mindestens ein Turmsegment aufweist,
einem Fundament (10) mit Segmentankern (12), wobei das Fundament (10) auf seiner Oberseite einen abgebundenen Ring aus einer dünnflüssigen, sich selbst nivellierenden Vergussmasse (17) aufweist,
Verbindungselementen (14), welche mit den Segmentankern (12) verbunden sind und ein vorgegebenes Maß über die Oberseite des Fundamentes (10) hinausragen, und
einem Nivellierring (18), welcher eine Mehrzahl von ersten Bohrungen zur Aufnahme der Verbindungselemente (14) aufweist, die die Oberseite (11) des Fundaments (10) um ein vorgegebenes Maß überragen und auf dem bereits abgebundenen Ring aus Vergussmasse (17) angeordnet wird, wobei ein unteres Turmsegment (22) mit einem unteren Flanschring (20) mit einer Mehrzahl von zweiten Bohrungen auf dem Nivellierring (18) aufgestellt und der untere Flanschring (20) mit den Verbindungselementen (14) verbunden wird, wobei die zweiten Bohrungen dazu ausgestaltet sind, die Verbindungselemente (14) aufzunehmen.

4. Windenergieanlage nach Anspruch 3, wobei das Fundament (10) Beton-Fertigteile aufweist.

5. Verwendung eines Nivellierringes (18) zur Errichtung eines Turmes einer Windenergieanlage, wobei der Nivellierring (18) eine Mehrzahl von ersten Bohrungen auf einem Ring aus einer vorab abgebundenen Vergussmasse (17) platziert wird, bevor ein unteres Turmsegment (22) mit einem unteren Flanschring (20) mit einer Mehrzahl von zweiten Bohrungen auf dem Nivellierring (18) aufgestellt und damit verbunden wird, wobei die Mehrzahl der ersten und zweiten Bohrungen dazu ausgestaltet ist, die Verbindungselemente (14) aufzunehmen,
wobei die Vergussmasse eine dünnflüssige sich selbst nivellierende Vergussmasse (17) darstellt und wobei die Vergussmasse nach der Abbindung eine exakt nivellierte Oberfläche darstellt.

## Claims

1. A method of erecting a pylon of a wind power installation, which has a foundation with segment anchors (12), wherein connecting elements (14) are connected to the segment anchors (12) and project beyond the top side (11) of the foundation (10) by a predetermined amount, comprising the steps:
constructing an annular formwork of predeterminable width and height on the top side (11) of the foundation (10) and filling the formwork with a predeterminable amount of a fluid self-levelling grouting material (17),
setting of the grouting material (17) so that an exactly levelled surface is automatically achieved and removal of the formwork,
placing a levelling ring (18) having a plurality of first bores for receiving the connecting elements (14) which project beyond the top side (11) of the foundation (10) on the surface (11) of the set grouting material (17), and
fitting and connecting a lower pylon segment (22) having a lower flange ring with a plurality of second bores for receiving the connecting elements (14) on the levelling ring (18) by means of the connecting elements (14).

2. A method according to claim 1 wherein prefabricated concrete parts are used for the foundation (10).

3. A wind power installation comprising
a pylon which has at least one pylon segment,
a foundation (10) with segment anchors (12), wherein the foundation (10) on its top side has a set ring comprising a fluid self-levelling grouting material (17),
connecting elements (14) which are connected to the segment anchors (12) and project a predetermined distance beyond the top side of the foundation (10), and
a levelling ring (18) which has a plurality of first bores for receiving the connecting elements (14) which project beyond the top side (11) of the foundation (10) by a predetermined amount and is arranged on the ring of grouting material (17) which has already set, wherein a lower pylon segment (22) having a lower flange ring with a plurality of second bores is placed on the levelling ring (18) and the lower flange ring (20) is connected to the connecting elements (14), wherein the second bores are adapted to receive the connecting elements (14).

4. A wind power installation according to claim 3 wherein the foundation (10) has prefabricated concrete parts.

5. Use of a levelling ring (18) for erecting a pylon of a wind power installation, wherein the levelling ring (18) having a plurality of first bores is placed on a ring of a previously set grouting material before a lower pylon segment (22) having a lower flange ring (20) with a plurality of second bores is placed on the levelling ring (18) and connected thereto, wherein the plurality of the first and second bores is adapted to receive the connecting elements (14),
wherein the grouting material represents a fluid self-levelling grouting material (17) and wherein the grouting material represents an exactly levelled surface after setting.

## Revendications

1. Procédé permettant d'ériger une tour d'une éolienne, qui présente une fondation (10) avec des ancrages de segment (12), dans lequel des éléments de liaison (14) sont reliés aux ancrages de segment (12) et dépassent du côté supérieur (11) de la fondation (10) d'une mesure prédéfinie, avec les étapes suivantes :
l'établissement d'un coffrage annulaire de largeur et hauteur prédéfinissables sur le côté supérieur (11) de la fondation (10) et le remplissage du coffrage avec une quantité prédéfinissable d'une masse de remplissage (17) fluide, autonivelante,
la prise de la masse de remplissage (17) de sorte qu'une surface exactement nivelée soit automatiquement obtenue et le retrait du coffrage,
le placement d'un anneau de nivellement (18) avec une pluralité de premiers perçages pour la réception des éléments de liaison (14) dépassant du côté supérieur (11) de la fondation (10) sur la surface (11) de la masse de remplissage (17) prise, et
le placement et la liaison d'un segment de tour inférieur (22) avec un anneau de bride inférieur avec une pluralité de seconds perçages pour la réception des éléments de liaison (14) sur l'anneau de nivellement (18) au moyen des éléments de liaison (14).

2. Procédé selon la revendication 1, dans lequel des éléments préfabriqués en béton sont utilisés pour la fondation (10).

3. Eolienne avec
une tour qui présente au moins un segment de tour,
une fondation (10) avec des ancrages de segment (12), dans laquelle la fondation (10) présente, sur son côté supérieur, un anneau pris en une masse de remplissage (17) fluide, autonivelante,
des éléments de liaison (14) qui sont reliés aux ancrages de segment (12) et dépassent d'une mesure prédéfinie du côté supérieur de la fondation (10), et
un anneau de nivellement (18) qui présente une pluralité de premiers perçages pour la réception des éléments de liaison (14), qui dépassent du côté supérieur (11) de la fondation (10) d'une mesure prédéfinie et est disposé sur l'anneau déjà pris en masse de remplissage (17), dans lequel un segment de tour inférieur (22) est placé avec un anneau de bride inférieur (20) avec une pluralité de seconds perçages sur l'anneau de nivellement (18) et l'anneau de bride inférieur (20) est relié aux éléments de liaison (14), dans lequel les seconds perçages sont configurés afin de recevoir les éléments de liaison (14).

4. Eolienne selon la revendication 3, dans laquelle la fondation (10) présente des éléments préfabriqués en béton.

5. Utilisation d'un anneau de nivellement (18) permettant d'ériger une tour d'une éolienne, dans laquelle l'anneau de nivellement (18) est placé une pluralité de premiers perçages sur un anneau en une masse de remplissage (17) prise précédemment avant qu'un segment de tour inférieur (22) ne soit placé avec un anneau de bride inférieur (20) avec une pluralité de seconds perçages sur l'anneau de nivellement (18) et ne soit relié à celui-ci, dans laquelle la pluralité de premiers et seconds perçages est configurée afin de recevoir les éléments de liaison (14),
dans laquelle la masse de remplissage constitue une masse de remplissage (17) fluide autonivelante et dans laquelle la masse de remplissage constitue, après la prise, une surface exactement nivelée.
